# EUROPEAN PATENT SPECIFICATION

(11) **EP 0 541 142 B1**
(45) Date of publication and mention of the grant of the patent: **14.02.1996**
(21) Application number: 92203116.6
(22) Date of filing: 09.10.1992
(51) Int. Cl.: F16L 37/10

(54) **Quick-action fitting for pipes**
Rohrschnellkupplung
Raccord à action rapide pour tuyaux

(30) Priority: 06.11.1991 IT MI912947
(43) Date of publication of application: 12.05.1993
(73) Proprietor: Bormioli, Giorgio, I-35100 Padova (IT)
(72) Inventor: Bormioli, Giorgio, I-35100 Padova (IT)
(74) Representative: Mittler, Enrico

(56) References cited:
- EP-A- 0 153 773
- FR-A- 492 330
- FR-A- 2 608 250
- US-A- 2 463 179

## Description

The present invention relates to a quick-action fitting for pipes.

In many applications it is useful to have a fitting available for making a quick connection of two pipes, as well as their just-as-quick separation. Such fittings are, for example, indispensable for the transfer of fluid oil products under difficult, occasionally dangerous, environmental conditions, such as in the open sea or from the sea to land or vice versa.

There are several pipe fittings currently known. Some of them have also been the object of patents by the same applicant of the present application.

In EP-A-0 153 773, corresponding to the Italien patent No. 1173342 filed on 23 February 1984 in the name of the same applicant, there is described a quick-action device for pipes comprising two fitting parts with a tubular shape that may be fastened to respective pipes to be joined together and quick-action coupling and uncoupling means for said fitting parts. The quick-action coupling and uncoupling means comprise a plurality of clamping segments distributed circumferentially in a plane perpendicular to the axis of the fitting parts and housed in radially-displaceable manner in respective radial windows of a first fitting part that, during the coupling step, may be partially superimposed over the second fitting part. The coupling and uncoupling means also comprise a rotating ring that may be operated to rotate round the protruding portion of the first fitting part so as to act on the clamping segments so as to thrust them in radial seats of the protruding portion of the second fitting part or to receive them in their own radial seats, for coupling or uncoupling, respectively, the fitting parts.

According to this prior document the contacting surfaces between the two fitting parts have partially a cylindrical shape and the hydraulic seal between them is accomplished by means of an annular seal interposed between said surfaces.

The uncoupling of the pipes is executed, after appropriate positioning of the rotating ring, by imparting to the same an axial separation force. Such uncoupling is made difficult and on occasion prevented by the presence of a bending moment between the pipes themselves, easily present in the case of couplings in the open sea or under difficult environmental conditions.

The same holds true for FR-A-492330 and FR-A-2608250.

The main object of the present invention is to provide a quick-action fitting for pipes that allows their uncoupling even in the presence of a bending moment.

Another object is that of accomplishing a quick-action fitting for pipes that also ensures a perfect hydraulic seal between the pipes.

According to the invention a quick-action fitting for pipes has thus been provided as defined in claim 1.

It shall be easily understood that the conical coupling between the male tubular part and the female tubular part allows the easy separation of the parts even in the presence of a bending moment.

Under this condition the floating ring ensures a perfect hydraulic seal, that during the use of the fitting is enhanced by the pressure of the fluid being transferred, that acting on the rear of the floating ring acts on a surface having an area that is larger with respect to that, provided with a front annular seal, on which it acts in the opposite direction.

The features of the present invention shall be made more evident by two embodiments illustrated as non-limiting examples in the enclosed drawings, wherein:

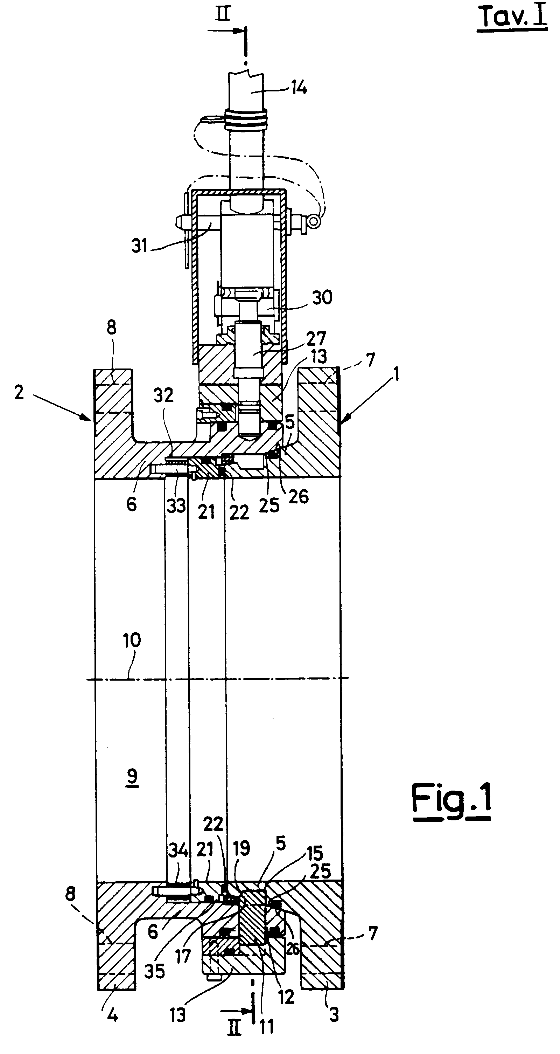

Fig. 1 shows a first quick-action fitting for pipes according to the invention sectioned axially along the line I-I of Fig. 2;
Fig. 2 shows said fitting in a transversal cross-sectional view taken along the line II-II of Fig. 1;

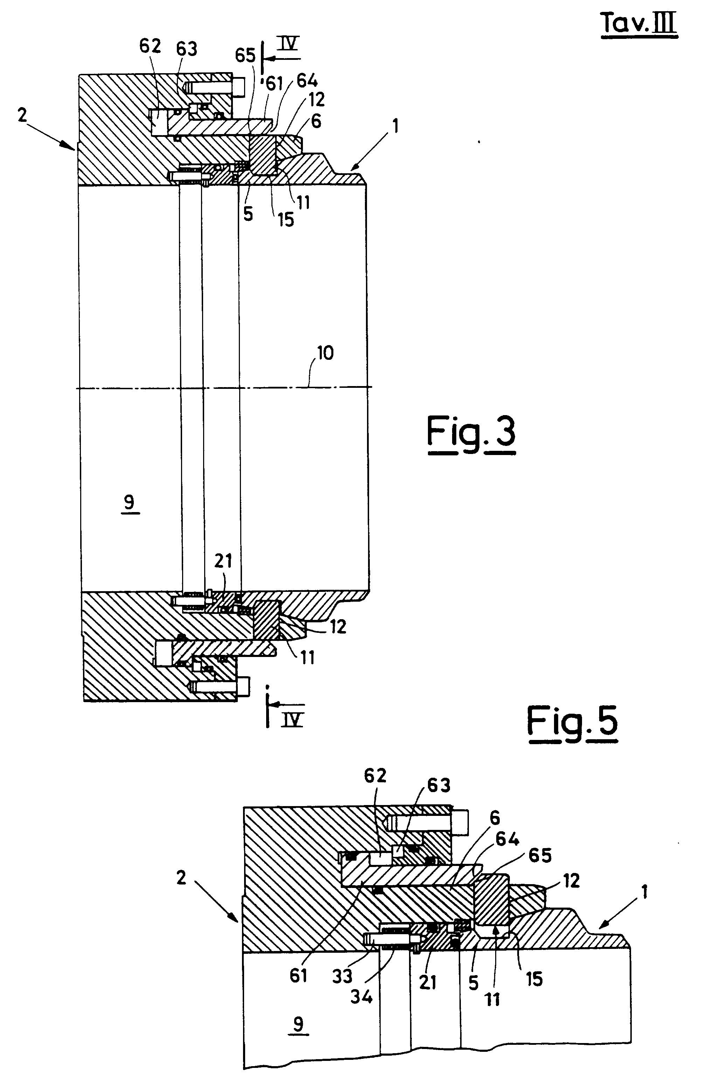

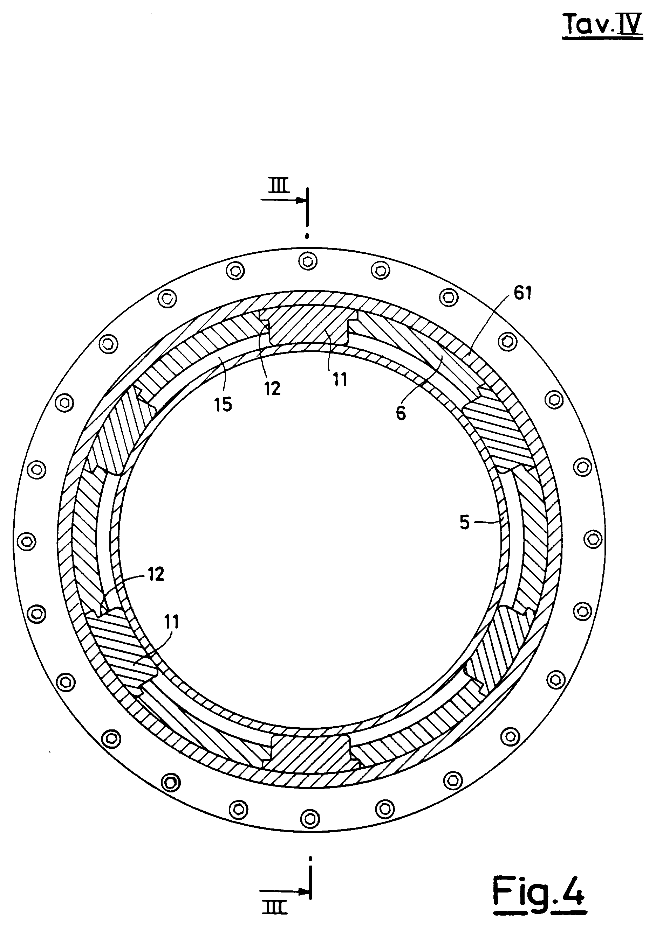

Fig. 3 shows a second fitting according to the invention sectioned axially along the line III-III of Fig. 4;
Fig. 4 shows said fitting in a transversal cross-sectional view taken along the line IV-IV of Fig. 3;
Fig. 5 shows a part of the fitting of Fig. 3 during the uncoupling step.

With reference to Fig.s 1 and 2 of the drawings, the fitting illustrated therein comprises a male tubular part 1 and a female tubular part 2, each constituted by a flanged portion 3, 4 and by a protruding axial portion 5, 6. The flanged portions 3, 4 are destined to being fastened, by means of screws inserted in holes 7, 8, to respective pipes to be joined together. The protruding portions 5, 6 may in turn be coupled one inside the other to define a single cylindrical passage 9 for the flow of fluid from one pipe to the other along a common axis 10.

The coupling between the tubular part 1 and the tubular part 2 takes place by means of respective contacting surfaces 25, 26 extending axially with a conical surface along their entire length. This conformation allows their separation even in the presence of a bending moment between the pipes.

The reciprocal connection between the two tubular parts 1 and 2, and thus that of the two pipes that have previously been fastened to them, is provided by quick-action coupling and uncoupling means, that include a plurality of clamping segments 11 distributed circumferentially in a plane that is perpendicular to the axis of flow 10 and housed in a radially-displaceable manner in respective radial windows 12 of the protruding portion 6 of the tubular part 2.

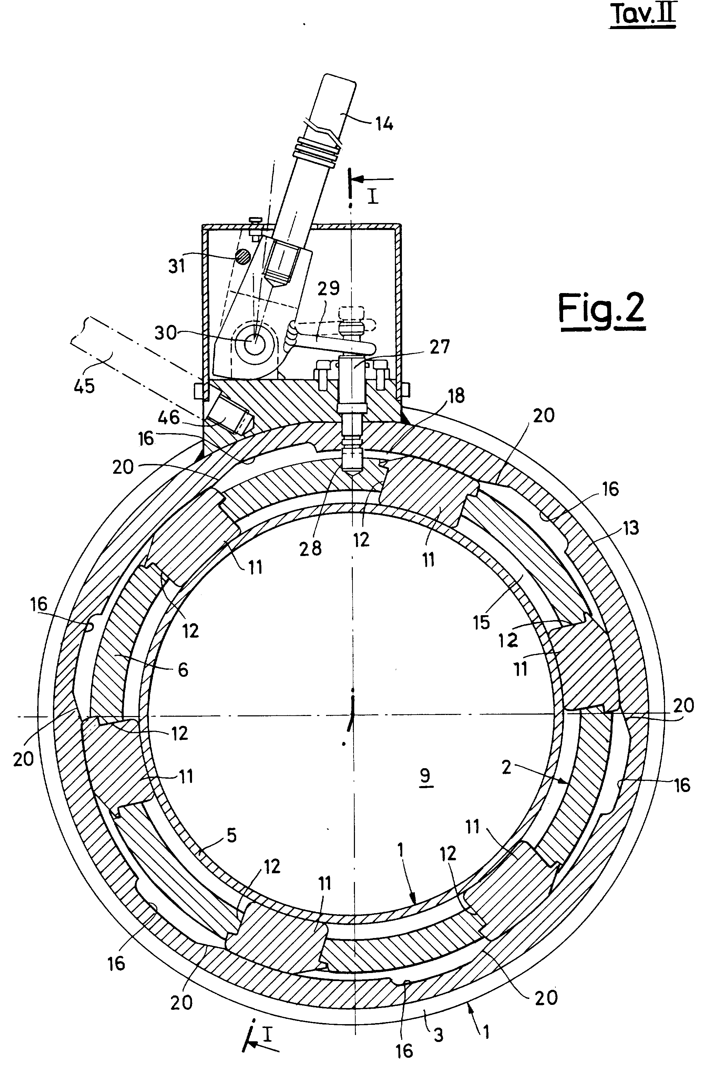

Over the circumferential succession of clamping segments 11, on the tubular part 2 there is arranged a rotating ring 13, that may be operated to rotate through a control rod 14 (or as an alternative through a supplementary rod 45 that may be inserted in a blind hole 46, shown in Fig. 2) and may be clamped in the position of reciprocal coupling of the tubular parts 1, 2 by means of a pin 27 that passes radially through the ring 13 and may be inserted in a seat 28 of the protruding portion 6 of the fitting part 2. The extraction of the pin 27 from the seat 28 for the consequent release of the rotating ring 13 may be obtained by the rotation of the control lever 14, to which a collar 29 is connected, round a fulcrum of it 30, after removal of a stop pin 31.

As illustrated in Fig. 2, the internal wall of the rotating ring 13 co-operates with the external wall of the segments 11 to thrust the latter toward the axis of flow 10 and inside radial seats obtained in the form of a continuous slot 15 in the external wall of the protruding part 5 of the tubular part 1. In the same internal wall of the rotating ring 13 there are on the other hand obtained some radial seats 16 (one for each segment 11), that when the ring 13 is rotated with respect to the position of Fig. 2, are capable of receiving the segments 11 when they leave the annular seat 15 of the tubular part 1. Bevels 17, 18 of the segments 11 co-operate with corresponding bevels 19, 20 of the seats 15 and 16 (Fig.s 1 and 2) to facilitate the radial displacements of the segments 11, as shall be explained later.

With a front shoulder 32 of the female part 2 there is associated by means of sliding pins 33 a floating front axial sealing ring 21, elastically urged by springs 34 against a front shoulder 32 of the male part 1 and provided with a front annular seal 35 so as to ensure the hydraulic seal between the two fitting parts 1 and 2 even in the presence of a bending moment between the pipes themselves.

The coupling and uncoupling of the tubular parts takes place in the following manner. With the rod 14 positioned as in Fig. 2 in the clamping position, the rotating ring 13 is in turn clamped in a position such that its internal wall urges and maintains the clamping elements 11 (housed in the windows 12 of the tubular part 2) engaged in the annular seat 15 of the tubular part 1. The two tubular parts 1 and 2 are thus firmly coupled together, and as a consequence so are the two pipes fastened to the two tubular parts 1, 2. The common passage 9 allows the transfer of the treated fluid product from one to the other of the two pipes.

For the quick uncoupling of the pipes it is sufficient to lift the pin 27 with the control rod 14 and then to act (by hand or hydraulically) on the rod itself (or on the supplementary rod 45) so as to cause the rotation of the rotating ring 13, whose radial seats 16 are thus brought opposite the mobile segments 11. At this point, an axial separation force imparted by the two pipes on the corresponding tubular parts 1 and 2 is sufficient, thanks to the co-operating bevels 17 and 19 of the segments 11 and of the annular seat 15, to cause the radial displacement of the segments 11 out of the seat 15 and into the seats 16 of the rotating ring 13 with the consequent reciprocal disengagement, and thus uncoupling, of the tubular parts 1 and 2 and of the pipes fastened to them.

Thanks to the conical conformation of the surfaces 25, 26 of reciprocal engagement between the fitting parts 1 and 2, the separation between the two abovementioned parts can take place, by rotation around the most external contact point therebetween, even in the presence of an axial force accompanied by a bending moment.

For the quick recoupling of the pipes it is on the other hand sufficient to recouple one inside the other the protruding axial portions 5 and 6 of the two tubular parts 1 and 2 and then to move the control rod 14 again quickly to the position illustrated in Fig. 2, so as to restore the engagement between the internal wall of the rotating ring 13 and the clamping segments 11. The latter are then reinserted in the annular seat 15 of the tubular part 2, facilitated in doing this by the co-operation between the bevels 18 of the segments 11 and the bevels 20 of the seats 16. The two tubular parts 1 and 2, and thus the two pipes, are in this way firmly joined together, with the pin 27 to ensure that the clamped condition is maintained.

Under this condition the floating front axial sealing ring 21 is elastically urged against the front shoulder 22 of the tubular part 1 so as to ensure the hydraulic seal between the tubular parts 1 and 2. Such seal is also enhanced, in use, by the pressure of the fluid being transferred, that, in the rear of the floating ring 21, finds a thrust surface that is greater than that in the opposite direction, circumscribed by the seal 35, with consequent differential thrust in the direction of engagement with the front shoulder 22 of the fitting part 1.

The fitting of Fig.s 3-5 is conceptually identical with that of Fig.s 1 and 2, from which it differs only for the fact that the movement of the segments 11 is provided by an axially-translatable ring 61 operated hydraulically by means of oil suitably delivered in annular chambers 62 (for clamping) and 63 (for unclamping).

Complementary bevels 64 and 65 of the ring 61 and of the segments 11 allow the conversion of the movement of axial advance of the ring 61 into a reciprocal transversal movement of the segments 11 toward one another for the insertion of the latter in the annular slot 15 of the male part 1 of the fitting.

Fig.s 3 and 4 show the fitting, and in particular the segments 11 and the ring 61 in the clamped condition, while Fig. 5 shows the same parts of the fitting in the unclamped condition, with the ring 61 in the rear position and the segments 11 extracted from the slot 15.

## Claims

1. Pipe quick-action fitting formed by a male tubular part (1) and by a female tubular part (2) to be joined together along respective contacting surfaces (25, 26) provided with quick-action coupling and uncoupling means (11-13; 15-20), wherein said contacting surfaces (25, 26) extend axially with a conical shape along their entire length, a floating front axial sealing ring (21) is movably fastened to the female part (2) and elastically urged against a front shoulder (22) of the male part (1) so as to ensure the hydraulic seal between said male and female parts (1, 2) and said quick-action coupling and uncoupling means (11, 13) comprise a plurality of clamping segments (11) distributed circumferentially in a plane perpendicular to the axis (10) of said tubular parts (1, 2) and housed in a radially-displaceable manner in respective radial windows (12) of a protruding axial portion (6) of said female tubular part (2) that, during the coupling step, may be superimposed over a corresponding protruding axial portion (5) of said male tubular part (1), and a ring (13, 61) mounted round said protruding axial portion (6) of said female tubular part (2) and operated to move with respect to it to act on said clamping segments (11) so as to thrust them in radial seats (15) of the female tubular part (2) or to receive them in their own radial seats (16), for coupling or uncoupling, respectively, said tubular parts (1, 2).

2. Fitting according to claim 1, characterised in that said radial seats (15) of the protruding portion (6) of said female tubular part (2) are in the form of a single annular slot.

## Patentansprüche

1. Rohrschnellkupplung, bestehend aus einem rohrförmigen Einsteckteil (1) und einem rohrförmigen Aufnahmeteil (2), die an jeweiligen Kontaktflächen (25, 26) miteinander verbunden werden, die mit Schnellkupplungs- und -entkupplungseinrichtungen (11 - 13; 15 - 20) versehen sind, wobei die Kontaktflächen (25, 26) axial mit einer konischen Form längs ihrer gesamten Länge verlaufen; ein frei beweglicher, vorderer axialer Dichtungsring (21) beweglich an dem Aufnahmeteil (2) befestigt ist und elastisch gegen ein vorderes Ansatzstück (22) an dem Einsteckteil (1) gedrückt wird, so daß die hydraulische Abdichtung zwischen dem Einsteckteil und dem Aufnahmeteil (1, 2) gewährleistet ist; und die Schnellkupplungs- und -entkupplungseinrichtungen (11, 13) eine Vielzahl von Spannsegmenten (11) umfassen, die am Umfang in einer Ebene senkrecht zur der Achse (10) der rohrförmigen Teile (1, 2) verteilt sind und radial verschiebbar in jeweiligen radialen Fenstern (12) eines hervorstehenden axialen Abschnitts (6) des rohrförmigen Aufnahmeteils (2) untergebracht sind, so daß sie beim Kuppeln einem entsprechendenden hervorstehenden axialen Abschnitt (5) des rohrförmigen Einsteckteils (1) überlagert werden können, sowie einen Ring (13, 61), der um den hervorstehenden axialen Abschnitt (6) des rohrförmigen Aufnahmeteils (2) herum befestigt ist und so betätigt wird, daß er sich relativ zu diesem bewegt und auf die Spannsegmente (11) einwirkt, so daß er diese in radial angeordnete Sitzflächen (15) des rohrförmigen Aufnahmeteils (2) schiebt oder diese in ihren eigenen radialen Sitzflächen (16) aufnehmen läßt, um die rohrförmigen Teile (1, 2) zu kuppeln bzw. zu entkuppeln.

2. Kupplung nach Anspruch 1, dadurch gekennzeichnet, daß die radial angeordneten Sitzflächen (15) in dem hervorstehenden Abschnitt (6) des rohrförmigen Aufnahmeteils (2) die Form eines einzelnen ringförmigen Schlitzes aufweisen.

## Revendications

1. Raccord rapide pour tubes, formé d'une partie tubulaire mâle (1) et d'une partie tubulaire femelle (2) destinées à être raccordées l'une à l'autre le long de surfaces respectives de contact (25, 26), ayant un dispositif d'accouplement et de désaccouplement rapide (11, 13 ; 15-20), dans lequel
les surfaces de contact (25, 26) sont disposées axialement avec une configuration conique sur toute leur longueur,
une bague axiale avant flottante d'étanchéité (21) est fixée à la partie femelle (2) afin qu'elle soit mobile et est repoussée élastiquement contre un épaulement avant (22) de la partie mâle (1) de manière qu'elle assure l'étanchéité hydraulique entre les parties mâle et femelle (1, 2), et
le dispositif d'accouplement et de désaccouplement rapide (11, 13) comprend plusieurs segments (11) de serrage répartis circonférentiellement dans un plan perpendiculaire à l'axe (10) des parties tubulaires (1, 2) et logés de manière mobile radialement dans des fenêtres radiales respectives (12) d'une partie axiale (6) en saillie de la partie tubulaire femelle (2) qui, pendant l'étape d'accouplement, peuvent être superposées à une partie axiale en saillie correspondante (5) de la partie tubulaire mâle (1), et une bague (13, 61) montée autour de la partie axiale en saillie (6) de la partie tubulaire femelle (2) et commandée afin qu'elle se déplace par rapport à celle-ci et agisse sur les segments de serrage (11) d'une manière qui les repousse dans des sièges radiaux (15) de la partie tubulaire femelle (2) ou les loge dans leur propre siège radial (16), pour l'accouplement ou le désaccouplement respectif des parties tubulaires (1, 2).

2. Raccord selon la revendication 1, caractérisé en ce que les sièges radiaux (15) de la partie en saillie (6) de la partie tubulaire femelle (2) sont sous forme d'une fente annulaire unique.
